Europäisches Patentamt
European Patent Office
Office européen des brevets

(11) Publication number: **0 221 225 A1**

# (12) EUROPEAN PATENT APPLICATION

(21) Application number: 85830264.9

(51) Int. Cl.[4]: **C01B 33/22**, C01B 33/28

(22) Date of filing: 21.10.85

(43) Date of publication of application: **13.05.87 Bulletin 87/20**

(84) Designated Contracting States: **AT BE CH DE FR GB IT LI LU NL SE**

(71) Applicant: **TOLSA S.A.**
**Nunez de Balboa 51**
**E-28001 Madrid(ES)**

(72) Inventor: **Berenguer, Antonio Alvarez**
**Fermin Caballero, 58**
**Madrid(ES)**
Inventor: **Casal, Blanca**
**Garcia Luna, 1**
**Madrid(ES)**
Inventor: **Fripiat, J.J.**
**5, Square Mignot**
**Paris(FR)**
Inventor: **Castells, Rafael Perez**
**Maria De Guzman, 49-7D**
**Madrid(ES)**
Inventor: **Hitzky, Eduardo Ruiz**
**Virgen De La Alegria, 3, 9-4**
**Madrid(ES)**
Inventor: **Rome, Julio Santaren**
**Austria, 15-7A**
**Fuenlabrada, Madrid(ES)**

(74) Representative: **Zorzoli, Franco**
**c/o BUGNION S.p.A. Via Carlo Farini 81**
**I-20159 Milan(IT)**

## (54) Process for manufacturing organophilic fibrous clays.

(57) Process for manufacturing organophilic fibrous clays useful as thickening and suspending agents in low-polarity solvents from Sepiolite or Palygorskite, the rheological characteristics of which were previously built up, which comprises the following steps:

(a) mixing the fibrous clays having a rheological grade with a quaternary ammonium salt of the general formula:

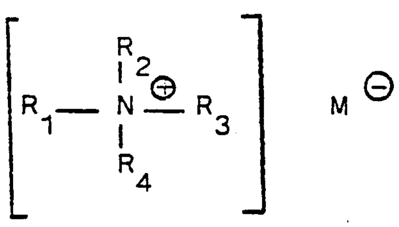

or

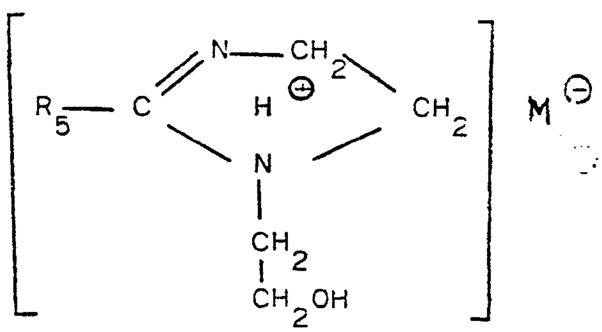

EP 0 221 225 A1

wherein $R_1$, $R_2$, $R_3$, $R_4$ and $R_5$ are saturated or unsaturated aryl, alkylaryl or alkyl hydrocarbon radicals of from 1 to 22 carbon atoms, which can be substituted with hydroxyl groups; the amount of ammonium salt incorporated being such that when the modified fibrous clays are dispersed in water, the amount of quaternary ammonium salt whereby it is equilibrated must be of 0.01 to 10 times the critical micellar concentration of the quaternary ammonium salt;

b) drying at a temperature below 100°C to a moisture lower than 20%; and

c) grinding to a granulometry of less than 74 $\mu$.

## Process for manufacturing organophilic fibrous clays

The fibrous clays to which the present invention refers belong to the Palygorskite-Sepiolite group. Palygorskite is a hydrated magnesium aluminium silicate having a fibrous structure, whilst Sepiolite is the magnesium variety of the series.

Sepiolite can occur in two forms: alpha-sepiolite appearing as bundles of crystalline fibres and beta-sepiolite appearing as amorphous aggregates or tiny particles, the ends of which are flat and round. Magnesium sepiolite is the commonest, although there are aluminium sepiolites (up to 19% of the octahedral positions occupied by Al), ferrous (xylotile), nickel-ferrous (Falcondoite), and sodium (Loughlinite).

Sepiolite and Palygorskite particles, seen under an electronic microscope, are associated in fibrous bundles similar to those of hay, These associations of individual fibres can be dissociated, preserving the fibres intact, to yield a Sepiolite or Palygorskite having a rheological grade, as described in Spanish patent applications No. 534,838 and 534,891.

Palygorskite-Sepiolite having a rheological grade can be used as thickening and suspending agents in media having a high and average polarity and mainly in aqueous media. However, since the fibres of these clays have a hydrphilic surface nature, stable suspensions or dispersions thereof cannot be obtained in non-polar organic media, particularly in aromatic media.

Processes for modifying Sepiolite in order to increase its dispersion capacity in poorly polar organic media have been described. Thus, Japanese patent applications SHO 54-75507 (publication 55-165975) and SHO 54-121233 (publication 56-43382) and the publication of Japanese patent 55-165970 can be cited as a reference. However, although Sepiolite which is capable of being dispersed in non-polar organic media increasing the viscosity thereof, can be obtained by the processes described in these applications, the results obtained can still be improved substantially.

There is another series of patents which describe organically modified products in which the mineral is attapulgite and the modifying agent is an amide (U.S. patent No. 2971922) or mixtures of mineral spirit, alkyd resins and esters (U.S. patent No. 2975071).

The present invention refers to a process for manufacturing organophilic fibrous clays useful as thickening or suspending agents in low-polarity organic media. With the process of the present invention there is obtained a product having remarkable characteristics, surprisingly higher than those of the prior art with a much higher dispersing capacity in poorly polar organic media, yielding suspensions having a substantially higher viscosity and stability.

The present invention refers to a process for obtaining a modified Sepiolite or Palygorskite having a rheological grade from Sepiolite or Palygorskite mineral, the rheological properties whereof have been built up utiliz ing any of the methods described in Spanish Patents No. 534,838 and 534,891, using quaternary ammonium salts of the general formula

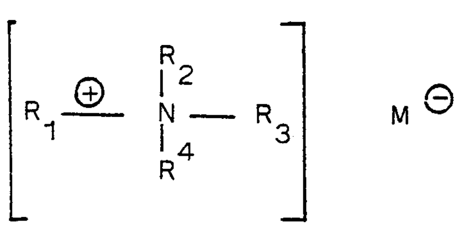

or

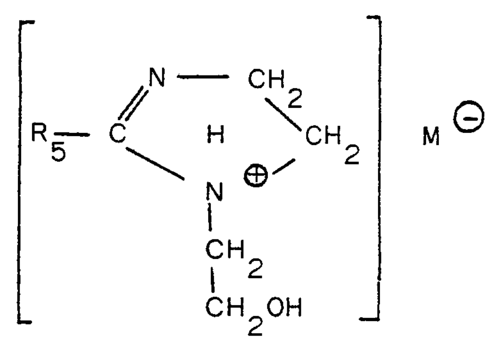

wherein $R_1$, $R_2$, $R_3$, $R_4$ and $R_5$ are saturated or unsaturated aryl, alkylaryl or alkyl hydrocarbon radicals of from 1 to 22 carbon atoms which can be substituted with hydroxyl groups and $M^-$ is an anion selected from $Cl^-$, $Br^-$, $I^-$, $CH_3$-$COO^-$.

The following can be cited as examples of the said alkyl radicals: methyl, ethyl, propyl, butyl, hexyl, octyl, nonyl, decyl, undecyl, dodecyl, tridecyl, tetradecyl, pentadecyl, hexadecyl, heptadecyl, octadecyl, nonadecyl and eicosyl. The following can be cited as examples of aryl radicals: phenyl, xylyl, naphthyl and anthracyl, and the following can be cited as examples of alkylaryl radicals: benzyl, phenylethyl and methylbenzyl.

A Sepiolite or Palygorskite having a rheological grade obtained according to the foregoing processes is utilized to obtain the organophilic fibrous clays of the present invention. These products are mixed with a quaternary ammonium salt, of those previously mentioned, which can be dissolved in water or in an appropriate solvent, in a proportion such that when the modified fibrous clay is suspended in water, it is equilibrated with a surface active amount of from 0.01 to 10 times the critical micelar concentration.

The properties of the end product are independent of the moisture of the mixture, although a moisture below 40% is preferably used.

A centrifugal, turbulence-type mixer can be employed for the admixture. The paste obtained is dried at a temperature below 90°C to a moisture of from 0 to 20%, depending upon the type of solvent in which the modified fibrous clays are going to be dispersed, and a final grinding is carried out to obtain a granulometry of less than 74 µ.

The mixture of the quaternary ammonium salt can be carried out during the process for obtaining rheological grade clays, after grinding the fibrous clays in an aqueous dispersion and before the solids concentration. In this case, the quaternary ammonium salt is added under stirring to the fibrous clay dispersion after grinding and it is maintained for a period of time of up to 24 hours. Thereafter, the concentration step by filtration, floatation, sedimentation or centrifugation is carried out and the paste obtained is dried at a temperatura below 90°C to a moisture of from 0 to 20%. Finally grinding is carried out to a granulometry of less than 74 µ.

The invention will now be described with more detail in the following examples, given merely by way of illustration and not limiting of the scope of the invention.

EXAMPLE 1

One kg of Sepiolite mineral having a moisture of 35% was used. It was grinded to a particle size of less than 2 mm. Four hundred and fifty ml of water were added thereto to obtain a product having a moisture of 55% and it was allowed to soak for 24 hours. Thereafter, it was grinded in a jaw mill, adding 7300 ml of water. The resultand pulp was sieved through a 44 µm mesh and 112 g of dimethylbenzylalkylammonium chloride, the alkyl chain of which has the following percentage composition:

| $C_{12}$ | $C_{14}$ | $C_{16}$ | $C_{18}$ | $C_{18}$ |
|---|---|---|---|---|
| 1% | 3% | 30% | 24% | 39% |

dissolved in 38 g of isopropyl alcohol, were added thereto.

It was stirred for 30 minutes and allowed to stand for 24 hours. Thereafter, it was filtered under vacuum and dried at 40°C to a moisture of 12%. Finally, it was grinded in a blade mill. Twenty grams of the product obtained were dispersed in 180 g of xylol utilising a LOMI stirrer at 12000 r.p.m. for 5 minutes, obtaining a perfectly homogenous, stable dispersion, the viscosity of which measured in Brookfield-Helipath at 5 r.p.m. was of 145000 cps.

EXAMPLE 2

The pump obtained in Example 1, after having been sieved through a 44 µm mesh, was concentrated by filtering on filter paper. The wet cake was dried at 100°C until a moisture of 10% was reached and it was grinded in a blade mill.

Five hundred grams of this product were mixed with 50 g of $H_2O$ and 52 g of dimethylbenzylalkylammonium chloride used in the preceding Example disssolved in 23 g of isopropyl alcohol, in a centrifugal, turbulence mixer. The resultant product was dried at 40°C to a moisture of 12%, obtaining a product which, upon dispersing 10% in xylol, in a LOMI stirrer at 12000 r.p.m. for 5 minutes, yielded a Brookfield-Helipath viscosity of 136000 cps at 5 r.p.m.

EXAMPLE 3

The wet cake obtained in Example 2 was extruded giving rise to "noodles" or "vermicilli" which were dried at 100°C to a moisture of 8%.

Five hundred grams of these "noodles" were mixed with 40 g of $H_2O$ and 52 g of dimethylbenzylalkylammonium chloride, used in Example 1, dissolved in 23 g of isopropyl alcohol, in a centrifugal, turbulence mixer, obtaining an organophilic Sepiolite having a 12% moisture.

This product, upon dispersing in different solvents at a solids concentration of 10%, stirring in a LOMI at 12000 r.p.m. for 5 minutes (Table I), yielded stable suspensions having a high viscosity.

TABLE I

| SOLVENT | BROOKFIELD-HELIPAHT VISCOSITY at 5 r.p.m. (cps) |
|---|---|
| White Spirits | 54,000 |
| Xylol | 72,000 |
| Benzene | 82,000 |
| n-Butyl phthalate | 250,000 |
| Styrene | 410,000 |

It is important to observe that the Sepiolite modified in accordance with the process of the present invention gives rise to suspensions having a higher viscosity than that obtained with the Sepiolite modified in accordance with the publication of Japanese patent 55-165975, whereby only 175000 cps are reached with 10% styrene suspensions.

EXAMPLE 4

Five hundred grams of "noodles" obtained in Example 3 were mixed with 40 g of $H_2O$ and 75 g 1-hydroxyethyl-2-alkylimidazoline acetate having an alkyl chain of from 16 to 18 carbon atoms, in a centrifuqal, turbulence mixer, giving rise to a product which was dispersed, 10% thereof, in xylol, toluene and n-butyl phthalate, stirring in a LOMI at 12000 r.p.m. for 5 minutes, giving the following results:

TABLE II

| SOLVENT | BROOKFIELD-HELIPATH VISCOSITY at 5 r.p.m. (cps) |
|---|---|
| Xylol | 30,000 |
| Toluene | 30,000 |
| n-Butyl phthalate | 37,000 |

EXAMPLE 5

Sepiolite was grinded in a jaw mill with a moisture of 10% to a granulometry of less than 74 µ. Five hundred grams of this Sepiolite were mixed with 50 g of $H_2O$ and 52 g of dimethylbenzylalkylammonium chloride, used in Example 1, dissolved in 23 g of isopropyl alcohol. The product obtained was dried at 40°C to a moisture of 12% and it was grinded in a blade mill. Ten per cent of the product obtained was dispersed in xylol, stirring in a LOMI at 12000 r.p.m. for 5 minutes. The suspension obtained was hardly stable and liberated solvent. Its viscosity was of 6000 cps at 5 r.p.m.

Thus, it is necessary to build up the rheological characteristics of the Sepiolite before modifying it to produce stable suspensions having a high viscosity in low-polarity solvents.

EXAMPLE 6

One kg of Palygorskite having a 70% purity and a moisture of 30%, the rheological properties of which were previously built up employing the processes described in Examples 1 and 2, were utilized. Five hundred grams of this product were mixed with 40 g of dimethylbenzylalkylammonium chloride dissolved in 52 g of water and 23 g of isopropyl alcohol, in a centrifugal turbulence mixer.

The organophilic Palygorskite was evaluated in styrene, dispersing 10 g of the product in 90 g of styrene in a LOMI stirrer at 12000 r.p.m. for 5 minutes. The resultant gel had a Brookfield-Helipath viscosity of 8400 cps at 2.5 r.p.m.

**Claims**

1. Process for manufacturing organophilic fibrous clays useful as thickening and suspending agents in low-polarity solvents from Sepiolite or Palygorskite, the rheological characteristics of which were previously built up, which comprises the following steps:

(a) mixing the fibrous clays having a rheological grade with a quaternary ammonium salt of the general formula:

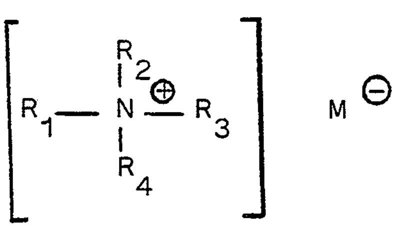

or

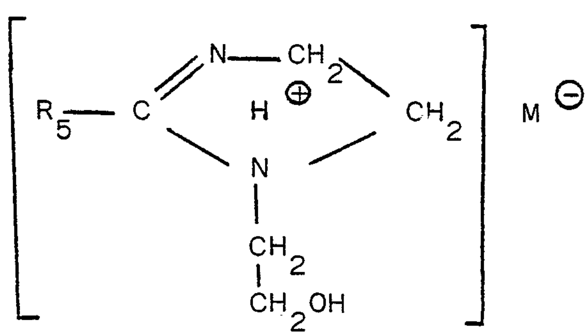

wherein $R_1$, $R_2$, $R_3$, $R_4$ and $R_5$ are saturated or unsaturated aryl, alkylaryl or alkyl hydrocarbon radicals of from 1 to 22 carbon atoms, which can be substituted with hydroxyl groups; the amount of ammonium salt incorporated being such that when the modified fibrous clays are dispersed in water, the amount of quaternary ammonium salt whereby it is equilibrated must be of 0.01 to 10 times the critical micelar concentration of the quaternary ammonium salt;

b) drying at a temperature below 100°C to a moisture lower than 20%; and

c) grinding to a granulometry of less than 74 $\mu$.

2. Process for manufacturing organophilic fibrous clays according to claim 1, characterized in that the quaternary ammonium salt is added dissolved in an organic solvent.

3. Process for manufacturing organophilic fibrous clays according to claim 1, characterized in that step a) is carried out in a centrifugal turbulence-type mixer.

European Patent Office

# EUROPEAN SEARCH REPORT

Application number

EP 85 83 0264

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 104, no. 24, 16th June 1986, page 8294, abstract no. 212042f, Columbus, Ohio, US; & ES-A-535 316 (TOLSA S.A.) 16-06-1985<br>* Whole abstract *<br>----- | 1-8 | C 01 B 33/22<br>C 01 B 33/28 |
| | | | TECHNICAL FIELDS SEARCHED (Int. Cl.4) |
| | | | C 01 B 33/00 |

The present search report has been drawn up for all claims

| Place of search | Date of completion of the search | Examiner |
|---|---|---|
| THE HAGUE | 12-12-1986 | BREBION J.CH. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document